(19) Europäisches Patentamt

European Patent Office

Office européen des brevets

(11) **EP 3 173 609 A1**

(12) **EUROPEAN PATENT APPLICATION**

(43) Date of publication:
**31.05.2017 Bulletin 2017/22**

(51) Int Cl.:
*F02M 21/02* (2006.01)       *F02D 19/06* (2006.01)

(21) Application number: **16200320.6**

(22) Date of filing: **23.11.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **25.11.2015 US 201562259769 P**

(71) Applicant: **Norgren GT Development Corporation
Auburn, WA 98001 (US)**

(72) Inventor: **URSAN, Mihai
Auburn, WA Washington 98001 (US)**

(74) Representative: **Gray, James
Withers & Rogers LLP
4 More London Riverside
London SE1 2AU (GB)**

(54) **APPARATUS AND METHOD FOR REGULATING FLUID PRESSURE**

(57)     A fluid pressure regulator comprising a housing; a cavity extending between a first end surface and a second end surface of the housing; a divider arranged within the housing and configured to divide the cavity into a first chamber, extending between the divider and the first end surface, for receiving a first pressurized fluid and a second chamber, extending between the divider and the second end surface, for receiving a second pressurized fuel; a liquid fluid inlet connected to the first chamber and adapted for introduction of a pressurized liquid fluid into the first chamber; a gaseous fluid inlet connected to the second chamber and adapted for introduction of a pressurized gaseous fluid into the second chamber; and a sensor device configured to monitor the position of the divider within the cavity of the housing.

FIG. 1

**Description**

The present invention relates generally to an apparatus and a method for regulating fluid pressures. More particularly, the invention relates to an apparatus and method for regulating fluid pressures in a fluid system which uses two distinct fluids, either alternatively or simultaneously. The fluid regulator of the present invention may be applied to a variety of fluid systems, such as dual fuel engines, plant watering systems and so forth.

With ever increasing raw oil prices and more and more stringent emission regulations, the use of alternative fuels, such as gaseous fuels, for operating combustion engines has become increasingly attractively. Most commonly, such alternative gaseous fuels are compressed natural gas (CNG) and liquified petroleum gas (LPG), which exhibit a higher specific calorific value compared to traditional fuel sources, and thus cause less air pollution.

An increasing number of customers are specifically requesting dual fuel systems, capable to run on conventional fuels and, additionally, on fuels, such as CNG and LPG. Dual fuel engines are well known in the art and combust a mixture of conventional liquid fuels, such as diesel fuel, and gaseous fuels such as LPG or CNG. By combusting two different types of fuel, the advantages of both fuels can be realised. In dual fuel engines, the pressures and/or flow rates of the two different kinds of fuel need to be controlled accurately to ensure correct performance of the engine. In particular, when combining diesel fuel with a gaseous alternative fuel, the diesel fuel is used for the ignition of the gas/air mixture inside the combustion cylinder. Historically, the liquid fuel and the gaseous fuel have been fed into a combustion cylinder independently, for example via separate liquid fuel pumps and pressurised gas reservoirs. It is a known problem of the conventional system that linking of the pressures and/or flow rate of the two fuels requires complicated control systems, which are prone to failure and high in cost, due to their complexity.

Due to the above, it is an object of the present invention to provide a method and a device for regulating fluid pressures, particularly for but not limited to dual fuel engines, which comprises a simple, more cost efficient construction. Additionally, it is an object to provide a method and apparatus that is more reliable and durable than the commonly known fluid pressure regulators.

The present invention solves the aforementioned objectives by means of a fluid pressure regulator according to claim 1 and a method for regulating fluid pressure according to claim 18.

In a first embodiment of the present invention, a fluid pressure regulator is provided with a housing and a cavity extending between a first end surface and a second end surface of the housing. A divider is arranged within the housing and configured to divide the cavity into a first chamber, extending between the divider and the first end surface, for receiving a first pressurised fluid and a second chamber, extending between the divider and the second end surface, for receiving a second pressurised fuel. The fluid pressure regulator further comprises a liquid fluid inlet connected to the first chamber and adapted for introduction of a liquid fluid into the first chamber, and a gaseous fluid inlet connected to the second chamber and adapted for reduction of a gaseous fluid into the second chamber. A sensor device is provided and configured to monitor the position of the divider within the cavity of the housing.

According to the present invention, the fluid pressure regulator comprises two chambers for introduction of two different kinds of fluid, the chambers being divided by a divider, which is freely moveable within the cavity of the housing. By virtue of this arrangement, the non-compressible first fluid, that is the liquid fluid, can be subjected to a pressure, which is dependent on the pressure of the second, compressible fluid, that is the gaseous fluid. In more detail, if the liquid fluid and the gaseous fluid act on the same surface area of the divider, then the pressure of the liquid fluid within the first chamber will be equal to the pressure of the gaseous fluid in the second chamber, which relates to a pressure ratio 1:1. As will be described in more detail below, this ratio can easily be amended, should this be necessary for the purpose of the pressure regulator. By monitoring the position of the divider within the housing, it is possible to determine at least the flow rate of the liquid fuel through the system, at any point in time.

The fluid pressure regulator of the present invention might be a fuel pressure regulator for regulating the gaseous and liquid fuel pressures of a dual fuel engine. In this regard, the liquid fuel might be diesel, while the gaseous fuel might be natural gas.

In another aspect of the present invention, the divider is moveable between the first end surface and the second end surface of the housing. If the divider moves towards the first end of the housing, the volume of the first chamber will reduce, whilst the volume of the second chamber increases and vice-versa. This embodiment represents a particularly simple construction of the housing and divider, which does not require any stops but rather holds the divider freely moveable within a cavity of the housing. Of course, it is also feasible to provide stop surfaces within the cavity of the housing, which restrict the moving space of the divider, thereby assuring minimum volumes for the first and second chamber.

In another embodiment, the fluid pressure regulator comprises a control unit adapted to control introduction of the liquid fluid into the first chamber, via the liquid fluid inlet. The control unit may further be adapted to control introduction of the gaseous fluid into the second chamber, via the gaseous fluid inlet. In a particularly preferred arrangement, the control unit is connected to the sensor device and configured to introduce liquid fluid into the first chamber, depending on the position of the divider within the housing. As the skilled person will understand, the position of the divider within the housing is ultimately determined by the amount of non-compressible liquid fluid within the first chamber. Accordingly, the control unit may be configured to maintain a predetermined volume of liquid fluid within the first chamber, which may in turn depend on the size and type of engine supplied by the fluid regulator.

The control unit may be adapted to control the introduction of the liquid fluid such that the divider remains in a predetermined working range about a predetermined working position. The predetermined working position may be chosen such that the volume of liquid fluid within the first chamber, that is the volume of liquid fluid within the housing, is appropriate for running a respective engine. The predetermined working range may be chosen in such a way that the amount of liquid fluid within the first chamber always exceeds the minimum amount of fluid required for operating the respective engine for a predetermined amount of time. The amount of time may relate to the "control cycle", i.e. the amount of time it takes a control unit to process the position signals received from the sensor device and supply more pressurized liquid fuel to the first chamber.

According to another embodiment of the present fluid pressure regulator, the working position is set in the centre between the first and second end surfaces of the housing, whereas the working range may extend 1 to 10 millimetres from the working position towards the first end surface and 1 to 10 millimetres from the working position towards the second end surface of the housing. Of course, the working range is not limited to such values. The skilled person would understand that the working range may vary, depending on several factors, such as the size of the chambers, the reaction time of the control unit and the liquid consumption of the fuel system.

In yet another embodiment, the fluid pressure regulator comprises a first inlet pressure gauge to measure the pressure of the gaseous fluid at the gaseous fluid inlet, wherein the control unit is connected to the first inlet pressure gauge and configured to control the supply of gaseous fluid into the second chamber, depending on a predetermined gas pressure value. As will be discussed in more detail below, the pressure at the gaseous fluid inlet is a measure for the pressure of the gaseous fluid within the second chamber of the fluid pressure regulator. Upon consumption of the gaseous fluid during operation of the respective fluid system, the gas pressure within the second chamber will decrease. The decrease in gas pressure is monitored by the first inlet pressure gauge, which in turn is connected to the control unit that is configured to control the supply of new gaseous fluid into the second chamber. The control unit is configured to supply enough gaseous fluid into the second chamber to maintain a predetermined gas pressure value. The predetermined gas pressure value may depend on the size and type of the respective engine. As mentioned previously, the liquid fluid pressure in the first chamber is directly dependent on the gas pressure within the second chamber. Consequently, the control unit functions to control both the gas pressure of the second chamber and the liquid fluid pressure of the first chamber, at the same time. In an alternative embodiment, the supply of gaseous fluid is not directly controlled but monitored by the control unit. In this embodiment, the pressurized gaseous fluid from a gaseous fluid source is supplied to the second chamber constantly via a normally open gaseous fluid inlet. Consequently, the pressure within the second chamber remains equal to the fluid pressure of the gaseous fluid source.

In another embodiment of the present invention, the pressure regulator is constructed in such a way that the liquid fluid pressure is 5psi to 10psi (0.345 bar to 0.690 bar) higher than the gaseous fluid pressure in the second chamber. It should be understood that the pressure difference may be significantly higher or lower than this, depending on the specific requirements of the corresponding fluid system. According to one arrangement, the difference in fluid pressure between the first and second chamber may be achieved by biasing the divider towards the first end surface of the housing, that is in the direction of the first chamber. One way of biasing the divider in the direction of the first end of the housing, may be the arrangement of a compression spring within the second chamber, which is adapted to apply its spring force on the divider, in a direction towards the first end surface of the housing. According to this embodiment, the divider comprises a piston, which seals the first chamber from the second chamber. The person skilled in the art would appreciate that placement of the compression spring can be on either side of the divider, therefore providing positive or negative bias pressure between the liquid and the gaseous fluid as required by the application.

Alternatively, it is also feasible to achieve the aforementioned pressure difference by providing a divider with unequal contact surfaces. In particular, the contact surface of the divider facing the second chamber may be constructed bigger than the opposite contact surface facing the first chamber. The person skilled in the art would appreciate that this could be achieved by any conventional means, such as a divider rod, which extends through the first chamber of the housing.

In an alternative embodiment of the present invention the pressure regulator is constructed for zero bias. There is no spring and therefore the gas pressure is equal to the liquid pressure within the housing. A piston and seal may be used as the divider to divide the cavity into two separate chambers.

Alternatively, if the housing is mounted vertically, so that said second chamber is on top of the said first chamber, the liquid fluid will be separated from the gaseous fluid by gravity. According to this embodiment, the divider may comprise a floating gauge. This divider (without a seal) can comprise a liquid fluid barrier and be used to prevent splashing and as a marker for the sensor device.

In another aspect of the present invention, the fluid pressure regulator further comprises a liquid fluid outlet connecting the first chamber with an engine fuel system, and a gaseous fluid outlet connecting the second chamber with an engine fuel system. Accordingly, the liquid fuel and the gaseous fuel remain separate but at a sharply defined ratio, until the two alternative fuels reach the engine fuel system, which will then be used simultaneously or subsequently by the engine.

In another embodiment, the fluid pressure regulator comprises a bypass line, connecting the liquid fuel source directly to the engine fuel system. The operator may choose whether the fuel system of the present invention may be used as a dual fuel system or as a single fuel system. If the operator chooses to run the system as a dual fuel system, the liquid fuel is introduced into the first chamber via the liquid fluid inlet, which may comprise one or more control valves. If, however, the operator would like to run the engine on liquid fuel only, the system may be operated in a "run on liquid fuel" mode, in which the liquid fuel bypasses the fluid pressure regulator and is directly introduced into the engine fuel system via a bypass line. To this end, the bypass line may comprise a bypass valve, which can be controlled by the aforementioned control unit. The control unit may also be configured to automatically choose between the two different modes of operation. In detail, the control unit may choose the "run on liquid fuel" mode for start up, while the temperature of the engine is still too low for use with gaseous fuels. Alternatively, the control unit might use the "run on liquid fuel" mode for diagnostic reasons or if the system has run out of gaseous fuel, or there are any issues with the system ("limp home mode").

According to another aspect of the present invention, the gaseous fluid outlet is connected to a vent valve, said vent valve being adapted to controllably vent the second chamber of the housing. When the engine is stopped, the fluid pressure regulator is shut down and the pressurised gaseous fluid in the second chamber can be released into a gas reservoir, via the vent valve. Due to the specific construction of the present fluid pressure regulator, it is not required to vent the non-compressible liquid fluid of the first chamber, since the pressure on the liquid fluid will be removed as soon as the gas pressure is released through the vent valve. Consequently, this particular embodiment provides for a quick and simple shut down function.

In another aspect, the liquid fluid is diesel and/or the gaseous fluid is natural gas, preferably compressed natural gas (CNG). Of course, it is equivalently feasible to use petroleum as the liquid fluid and/or LPG as the gaseous fuel.

The present invention further relates to a fuel system comprising a liquid fuel source and a gaseous fuel source, said liquid and gaseous fuel sources being connected to an engine fuel system via the pressure regulator of the present invention.

In another embodiment, the present invention discloses an engine comprising the aforementioned fuel system.

The present invention further relates to a method for regulating fluid pressure comprising the following steps:

providing a housing with a cavity extending between a first end surface and a second end surface;
providing a divider arranged within the housing and configured to divide the cavity into a first and second chamber;
filling the first chamber with pressurized liquid fluid;
filling the second chamber with pressurized gaseous fluid;
monitoring the position of the divider within the cavity of the housing.

In another embodiment, the method further comprises controlling the amount of liquid fluid introduced into the first chamber depending on the position of the divider within the cavity of the housing.

In another aspect, the amount of liquid fluid introduced into the first chamber is controlled such that the divider remains in a predetermined working range about a predetermined working position.

According to another embodiment, the method of the present invention further comprises measuring the pressure of the gaseous fluid at the gaseous fluid inlet of the second chamber, and controlling the supply of gaseous fluid into the second chamber depending on a predetermined gas pressure value.

In another aspect, the method comprises biasing the divider towards a first end surface at the end of the first chamber, preferably by means of a compression spring.

In the following, detailed description of the figures, preferred embodiments of the present invention are explained.

FIGURE 1 is a schematic cross-section of a first embodiment of a fluid pressure regulator according to the present invention;

FIGURE 2 is a schematic cross-section of a second embodiment of a fluid pressure regulator according to the present invention;

FIGURE 3a is a schematic cross-section of the second embodiment according to Figure 2, during filling of the first chamber with liquid fluid;

FIGURE 3b is a schematic cross-section of the second embodiment according to Figure 2, during filling of the second chamber with a gaseous fluid;

FIGURE 4 is a schematic cross-section of a third embodiment of a fluid pressure regulator according to the present invention;

FIGURE 5 is a schematic interface diagram of the fuel system according to a first embodiment of the present invention, comprising the fluid regulator of the second embodiment of Figure 2;

FIGURE 6 is a schematic interface diagram of a second embodiment of the fuel system according to the present invention, comprising the fluid pressure regulator according to the second embodiment of Figure 2;

FIGURE 7 is a schematic interface diagram of a third embodiment of the fuel system according to the present invention, comprising the fluid pressure regulator according to the second embodiment of Figure 2; and

FIGURE 8 is a schematic interface diagram of a fourth embodiment of the fuel system according to the present invention, comprising the fluid pressure regulator according to the third embodiment of Figure 4.

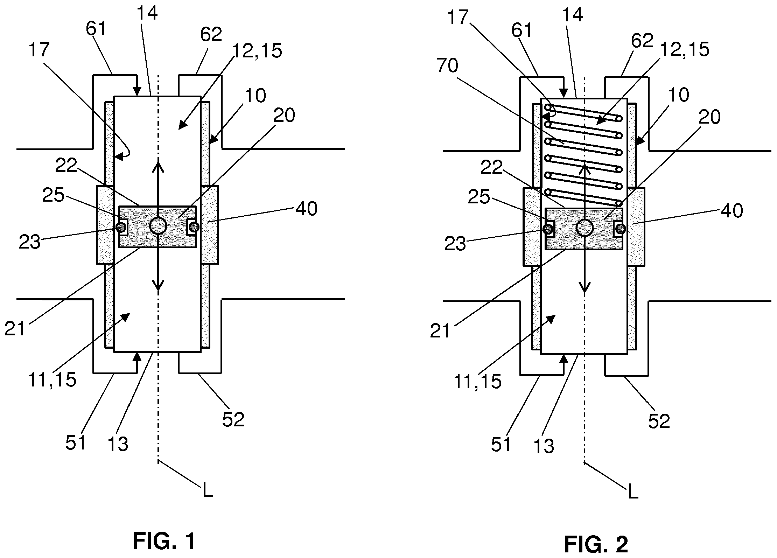

Figure 1 shows a schematic cross-section of a first embodiment of the pressure regulator according to the present invention. The pressure regulator comprises a housing 10 with a cavity 15 that extends between a first end surface 13 and a second end surface 14 of the housing 10. A divider 20 is arranged within the cavity 15 of the housing 10 and divides the cavity 15 into a first chamber 11 which extends between the divider 20 and the first end surface 13, and a second chamber 12, which extends between the divider 20 and the second end surface 14. The first chamber 11 is adapted for receiving first pressurised fuel, in particular a liquid fluid such as a diesel fuel. The second chamber 12 is adapted for receiving a second pressurised fuel, in particular a gaseous fuel, such as a compressed natural gas.

The divider 20 is constructed as a piston, which is in contact with and guided by an interior wall 17 of the housing 10. In order to prevent an inadvertent mixture of the gaseous fluid of the second chamber 12 with the liquid fluid of the first chamber 11, the divider 20 comprises a seal member 23, which is received within an annular recess 25. The divider 20 is freely moveable between the first end surface 13 and the second end surface 14 of the housing 10 as indicated by the two arrows. As will be appreciated by any skilled person, the position of the divider 20 within the housing 10 is determined by the amount of liquid fuel, which is introduced into the first chamber 11 via fluid inlet 51. In particular, due to the non-compressible nature of the liquid fuel, the amount of gaseous fluid within the second chamber 12 is irrelevant for the position of the freely moveable divider 20.

Figure 1 further schematically shows a sensor device 40 which is adapted to monitor the position of the divider 20 within the cavity 12 of the housing 10. As will be described in more detail below, the sensor device 40 may be used to control the position of the divider 20 within a predetermined working range. The divider 20 of Figure 1 comprises two opposite contact surfaces 21, 22, which exhibit the same surface area. In other words, the surface area of the first contact surface, facing the first end 13 of the housing 10, is equal to the surface area of the second contact surface 22, facing the second end surface 14 of the housing 10.

Accordingly, in the first embodiment, the pressure of the liquid fluid within the first chamber 11 is always substantially the same as the pressure of the gaseous fluid within the second chamber 12. The skilled person will understand, that although provision of a gaseous fluid to the engine fuel system via fluid outlet line 62 will decrease the absolute gas pressure within the second chamber 12, the ratio between the gas fluid pressure and the liquid fluid pressure will always remain the same, which is crucial for the correct function of a dual fuel engine. In this particular embodiment, the ratio between the gaseous fluid pressure and the liquid fluid pressure will always remain at about 1:1.

Figure 2 shows a second embodiment of the fluid pressure regulator according to the present invention. The construction of the fluid pressure regulator according to the second embodiment is very similar to the first embodiment and identical parts are denoted with identical reference numbers. In contrast to the first embodiment of Figure 1, the second embodiment shown in Figure 2, further comprises a compression spring 70 which is used to bias the divider 20, which is again constructed as a piston with a seal member 23, towards the first end surface 13 of the housing 10. The bias introduced by the compression spring 70 will cause a pressure difference between the first and second chamber, and thus will change the pressure ratio achieved by the fluid pressure regulator of the second embodiment in comparison to the fluid pressure regulator of the first embodiment. In particular, the specific construction of the second embodiment shown in Figure 2 will result in a liquid fluid pressure in the first chamber 11 which is always higher than the gaseous fluid pressure in the second chamber 12. This is due to the fact that the pressure exerted on the divider 20 from the first chamber 11 results from the pressure of the liquid fuel, whereas the pressure exerted on to the divider 20 from the first chamber 11 is a sum of the pressures of the gaseous fluid and the compression spring 70. As mentioned before, the pressure ratios could also be changed by changing the size of the contacting surfaces 21, 22 of the divider 20.

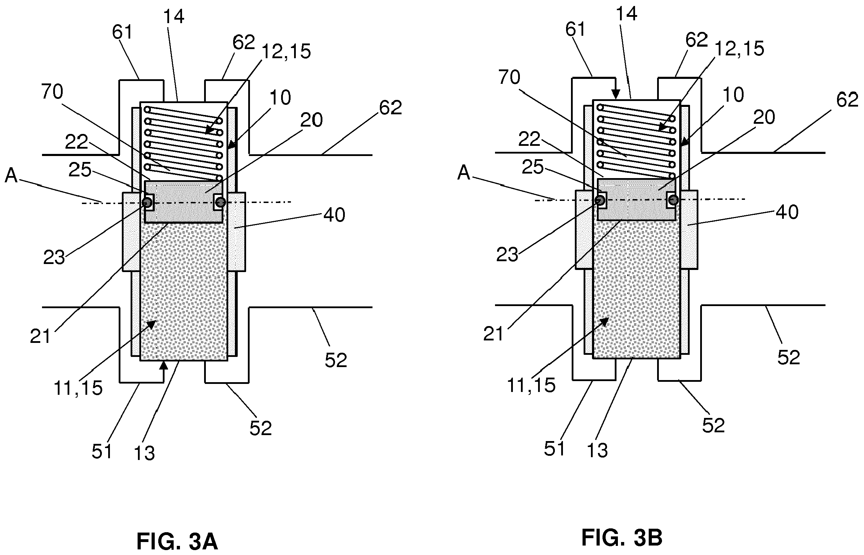

The method of controlling fluid pressure according to the present invention is better understood in view of Figures 3a and 3b. A first step, in which pressurized liquid fluid is introduced into the first chamber 11 of the housing 10 via a liquid fluid inlet 51, is depicted by Figure 3a. Although liquid fluid inlet 51 is shown as an inlet line, it should be understood that the pressure regulator could be directly attached to the corresponding fluid source (not shown) without the need for a fluid line. During this filling step, liquid fluid is introduced into chamber 11 until the divider 20 reaches its working position within the housing 10. The working position is monitored by the sensor device 40 and is indicated by axis A. It should be understood that the pressure ratio between the gaseous fluid and the liquid fluid is steplessly variable by virtue of the working position of the divider 20. The person skilled in the art will appreciate that filling more liquid fluid into the first chamber 11 will push the divider 20 towards the second end 14 of the housing 10, thereby depressing compression spring 70. When depressing compression spring 70, the spring pressure which acts against divider 20 increases continuously and thereby changes the pressure difference according to the following equation:

$$P_{\text{liquid fluid}} = P_{\text{spring}} + P_{\text{gaseous fluid}}$$

At the first method step of Figure 3a, that is when the second chamber 12 does not hold any gaseous fuel, the fluid pressure will therefore equal the pressure of the spring, which results from the restoring force of the spring 70 acting on the second contact surface 22 of the divider 20.

During a second method step, shown in Figure 3b, a gaseous fluid is introduced into the second chamber 12 via gaseous fluid inlet line 61. As the gaseous fluid is introduced into the second chamber 12, the divider 20 will not change its position within the housing 10 due to the non-compressible nature of the liquid fluid in the first chamber 11. However, introduction of the gaseous fluid into the second chamber 12 will inevitably increase the pressure on the divider 20 and thereby increase the pressure of the liquid fluid according to the aforementioned formula. The pressure of the gaseous fluid within the second chamber 12 will, however, always be smaller than the pressure of the liquid fluid in the first chamber 11 by the amount of pressure exerted by the spring. For as long as the divider 20 remains in the same position, the pressure difference between the gaseous fluid and the liquid fluid will remain constant. The pressure difference is preferably maintained at 5psi to 10psi (0.345 bar to 0.690 bar). It should be understood that the ratio between the gaseous pressure and the liquid pressure changes as a function of the gaseous pressure, even if the pressure difference is constant:

$$\frac{P_{\text{liquid fluid}}}{P_{\text{gaseous fluid}}} = \frac{P_{\text{gaseous fluid}} + P_{\text{spring}}}{P_{\text{gaseous fluid}}} = 1 + \frac{P_{\text{spring}}}{P_{\text{gaseous fluid}}}$$

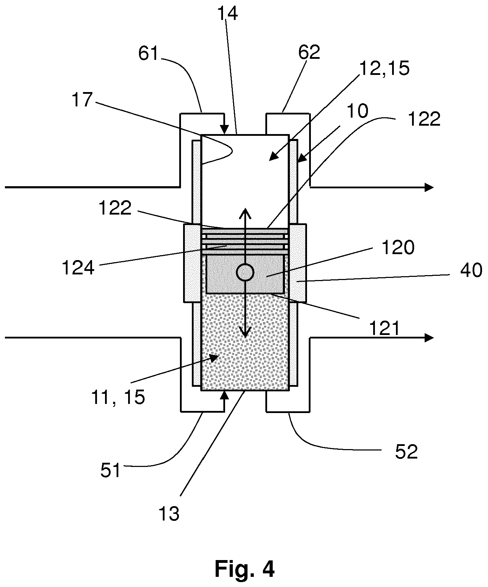

A third embodiment of the fluid pressure regulator of the present invention is shown in Figure 4. The pressure regulator according to the third embodiment has a similar construction to the pressure regulator of the first embodiment shown in Figure 1. Identical parts are denoted with identical reference numbers. The third embodiment of the pressure regulator is a zero bias pressure regulator, similar to the first embodiment. However, in contrast to the first embodiment, the divider 120 of the third embodiment does not comprise a seal. Rather, the divider 120 comprises a floating gauge. The divider 120 floats on top of the liquid fuel, which is introduced into the second chamber 12 and does not prevent fluids from contacting. The divider 120 further comprises a liquid fluid barrier 124, which is arranged to avoid splashing of the liquid fuel 11 within the cavity of the housing 10. As in the first and second embodiment, the position of the divider 120 within the housing 10 can be determined by the sensor device 40.

The embodiment of Figure 4 is a particularly simple construction of the present fluid pressure regulator, since seals are not required between the first and second chamber 11, 12. Rather, since the housing 10 is arranged vertically, such that the second chamber 12 is positioned on top of the first chamber 11, the gaseous fluid will remain in the second chamber 12, due to gravity alone.

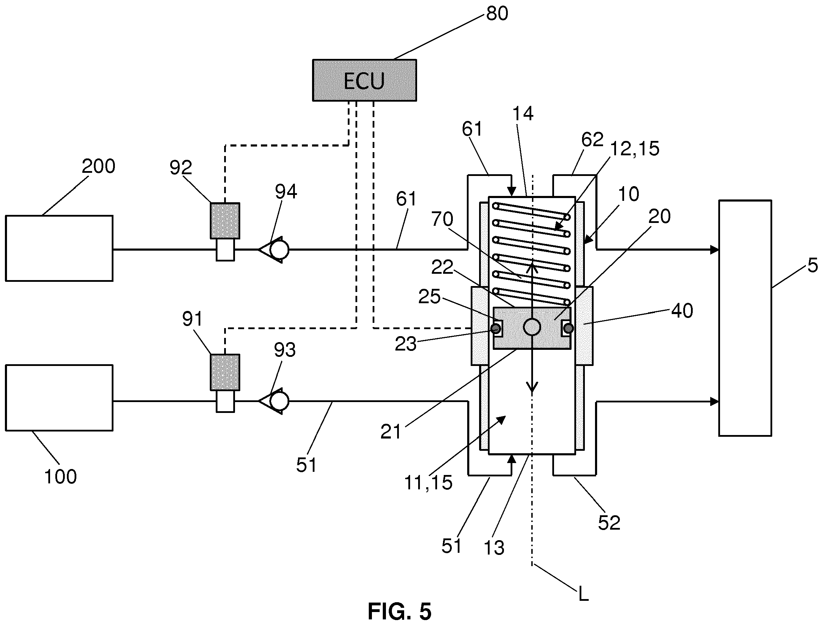

Figure 5 shows a schematic view of a fuel system comprising the pressure regulator of the present invention. The system comprises a pressurized liquid fuel source 100 and a pressurized gaseous fuel source 200 which are connected to a dual fuel engine system 5 via the pressure regulator 1. Of course, the pressurized fuel sources 100, 200 should be understood as black boxes which could include fuel tanks, pumps and other conventional means for providing pressurized gaseous and liquid fuels, respectively. The supply of fuel into the first and second chambers 11, 12 of the fluid regulator 1 is regulated by control unit 80 which is connected to a plurality of control valves. In more detail, the control unit 80 is connected to a first solenoid valve 91 located within the liquid fluid inlet 51 between the liquid fuel source 100 and the first chamber 11 of the fluid regulator 1. Upon activating of the first solenoid valve 91, pressurised liquid fuel can be supplied from the liquid fuel source 100 into the first chamber 11 via fluid inlet 51. Similarly, control unit 80 is also connected to a second solenoid valve 92, which is located on the gaseous fluid inlet 61, between the gaseous fuel source 200 and the second chamber 12 of the fluid regulator 1. Upon actuation of the second solenoid valve 92, gaseous fuel is supplied from the gaseous fuel source 200 into the second chamber 12. The first and second solenoid valves 91, 92 are preferably constructed to be in a normally closed position and only open in response to a signal provided by the control unit 80.

First and second check valves 93, 94 are provided in the liquid fluid inlet 51 and the gaseous fluid inlet 61 respectively. Each of the check valves 93, 94 is located downstream of the first or second solenoid valve 91, 92. Check valves 93, 94 prevent the fuels from flowing back out of the first and second chamber 11, 12, via the respective fluid inlets 51, 61. In other words, the check valves 93, 94 function as one-way inlet valves of the fluid pressure regulator 1.

Figure 5 further shows that the control unit 80 is connected to the sensor device 40 to receive position information of the divider 20 within the housing 10. As mentioned before, the control unit 80 will control introduction of the liquid fuel from the liquid fuel source 100 into the first chamber 11 on the basis of the predetermined working position (Figures 3A and 3B) of the divider 20. The control unit 80 will introduce liquid fuel into the first chamber 11 until the divider 20 reaches its working position. As liquid fuel is consumed by the respective engine, the divider 20 will move towards the first end surface 13 of the housing 10 and thereby deviate from its working position. The control unit 80 will recognise the movement of the divider 20 within the housing 10 by means of the feedback signal provided by the sensor device 40 and start refilling the first chamber 11 via liquid fluid inlet 51 until the divider 20 reaches its working position once again.

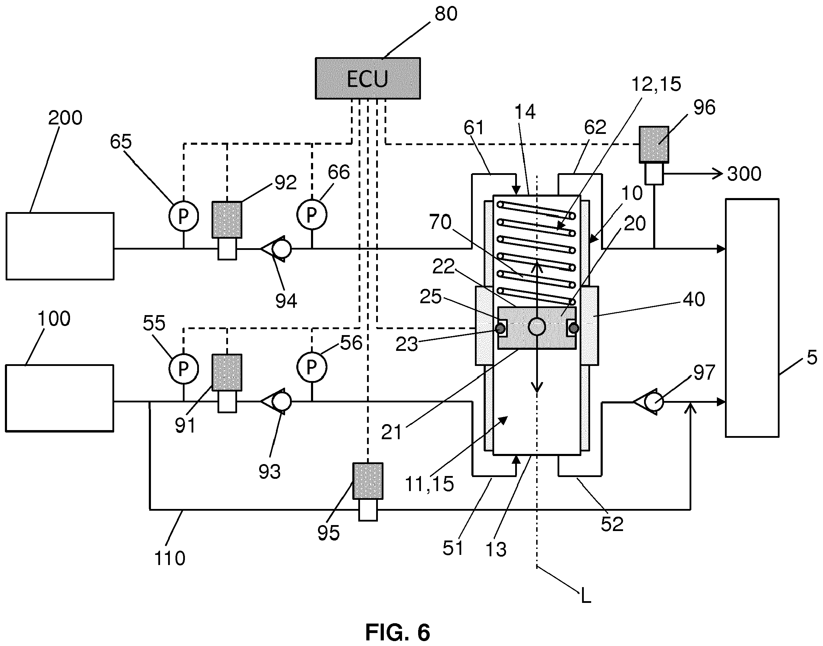

As will be described in more detail with reference to Figure 6 below, the control unit 80 can further control the pressure of the gaseous fluid and the liquid fluid within the fluid regulator 1 by means of the second solenoid valve 92 within the gaseous fluid inlet line 61.

Figure 6 shows a second embodiment of the fuel system comprising the pressure regulator of the present invention. The second embodiment of Figure 6 generally comprises the same parts as the first embodiment of Figure 5, which are indicated with identical reference numbers. As shown, the control unit 80 is further connected to a plurality of pressure gauges 55, 56, 65, 66. In particular, the control unit 80 is connected to first and second fluid supply pressure gauges 55, 65 which are located downstream of the liquid fuel source 100 and the gaseous fuel source 200 respectively. The control unit 80 is further connected to first and second inlet pressure gauges 56, 66 which are located downstream of the check valves 93, 94. The first and second inlet pressure gauges effectively measure the pressure within the first and second chamber 11, 12 of the pressure regulator 1. The pressure within the system is preferably regulated by means of gaseous fluid pressure within the second chamber 12. In other words, the control unit 80 receives the pressure signal from the inlet pressure gauge 66 and controls the supply of gaseous fuel into the second chamber 12 depending on a predetermined gas pressure value, which depends on the type and size of the respective engine. The respective liquid fluid pressure within the first chamber is directly dependent on the gas pressure in the second chamber 12 and results from the formula stated above. The plurality of gauges 55, 56, 65, 66, may also be used for diagnostic of the system status.

The system of Figure 6 further shows a bypass line 110 which directly connects the liquid fuel source to the engine system 5 of the respective engine. A bypass control valve 95 is located within the bypass line 110 and connected to the control unit 80. If the operator chooses to switch from a dual fuel operation of the engine to a single fuel operation, control unit 80 will activate the bypass control valve 95 to open bypass line 110, thereby supplying liquid fuel directly to the engine system, and bypassing the fluid regulator 1. It is equivalently feasible that this mode, which is also known as a "run on liquid fuel" mode, can be selected automatically by the control unit in case the supply pressure of the gaseous fluid at supply pressure gauge 65 drops below a predetermined threshold, due to a failure in the gas supply or insufficient amounts of gas within the gaseous fuel source 200. In order to stop liquid fuel from entering the second chamber via the liquid fluid outlet line 52 during the "run on liquid fuel" mode, another check valve 97 is provided in the liquid fluid outlet line 52.

The second embodiment of the fuel system shown in Figure 6 also comprises a vent valve 96 which is connected to the gaseous fluid outlet 62. The vent valve 96 is adapted to controllably vent the second chamber 12 of the housing 10 in case of a shutdown. To this end, the outlet of the vent valve 96 is connected to a vent system 300. Activation of the vent valve 96 is, in turn, controlled by control unit 80. As will be understood, the pressure on the liquid fluid within the first chamber 11 will be relieved as soon as the second chamber 12 is cleared of the pressurised gas fuel, which is why a liquid fluid drain in not required.

For the system of Figure 6, the valves 91, 92, the pressure gauges 65, 66, 55, 56 can be used for accurate control of fuel supply and to mitigate abnormal functional situations should they occur.

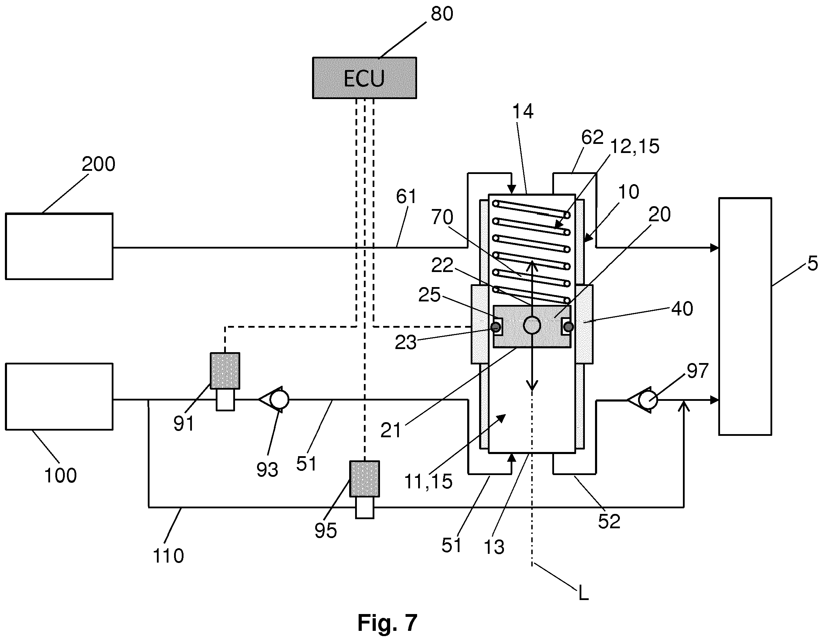

A third embodiment of the fluid system is shown in Figure 7. The embodiment shown in Figure 7 is substantially identical to the embodiment of Figure 6. However, according to the embodiment of Figure 7, pressurised gaseous fluid is constantly supplied from the gas source 200 into the second chamber 12 of the pressure regulator. Consequently, the embodiment of Figure 7 does not comprise a gaseous fluid inlet valve, unlike the second embodiment of Figure 6. In other words, the pressure of the gaseous fluid within the second chamber 12 is directly controlled by the gas source 200. Gaseous fluid will flow through the regulator via inlet 61 and outlet 62 and determine the liquid fluid pressure in correspondence with the pressure of the gaseous fluid source 200. Accordingly, the control unit 80 of Figure 7 will only control the supply of liquid fluid and thereby the bias of spring 70, by virtue of monitoring the position of the divider 20 within housing 10. As a consequence, the pressure gauges 65 and 66 are redundant and may be replaced by a pressure gauge of the gaseous fluid source 200.

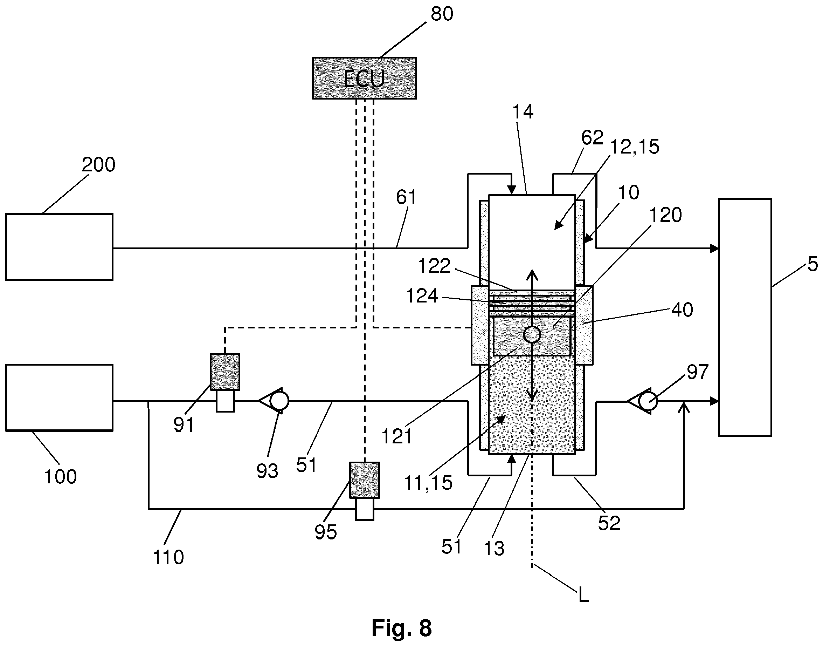

Figure 8 shows a fourth embodiment of the present fluid system comprising a fluid regulator according to the third embodiment shown in Figure 4. The function of the fluid system shown in Figure 8 is similar to the function of the fluid system shown in Figure 7. However, the pressure regulator is constructed as a non-bias pressure regulator, rendering the pressure of the liquid fluid in the first chamber 11 equal to the pressure of the gaseous fluid in the second chamber 12 at all times. It should be noted that the pressure regulator is located in a vertical position such that the liquid fluid and the gaseous fluid are separated by gravity. The divider 120 itself is permeable to fluids and comprises a liquid fluid barrier 124, which prevents splashing of the liquid fluid from the first chamber 11 into the second chamber 12. As mentioned previously in connection with Figure 4, the divider 120 does not require a seal and hence can be regarded as a floating gauge that is monitored by the sensor device 40 to determine the amount of liquid fluid within the first chamber 11 of the pressure regulator.

While particular elements, embodiments and applications of the present invention have been shown and described, it will be understood that the invention is not limited thereto since modifications may be made by those skilled in the art without departing from the spirit and scope of the present disclosure, particularly in light of the foregoing teachings.

## Claims

1. A fluid pressure regulator comprising:

    a housing;
    a cavity extending between a first end surface and a second end surface of the housing;
    a divider arranged within the housing and configured to divide the cavity into a first chamber, extending between the divider and the first end surface, for receiving a first pressurized fluid and a second chamber, extending between the divider and the second end surface, for receiving a second pressurized fuel;
    a liquid fluid inlet connected to the first chamber and adapted for introduction of a pressurized liquid fluid into the first chamber;
    a gaseous fluid inlet connected to the second chamber and adapted for introduction of a pressurized gaseous fluid into the second chamber; and
    a sensor device configured to monitor the position of the divider within the cavity of the housing.

2. The fluid pressure regulator of claim 1,
    wherein the divider is movable between the first end surface and the second end surface of the housing.

3. The fluid pressure regulator of claims 1 or 2,
    further comprising a control unit adapted to control introduction of the liquid fluid into the first chamber, via the liquid fluid inlet, and to control introduction of the gaseous fluid into the second chamber, via the gaseous fluid inlet.

4. The fluid pressure regulator of claim 3,
    wherein the control unit is connected to the sensor device and configured to introduce liquid fluid into the first chamber, depending on the position of the divider within the housing, for example wherein the control unit is adapted to control introduction of the liquid fluid such that the divider remains in a predetermined working range about a predetermined working position, for example wherein the working position is set in the centre between the first and second end surfaces of the housing.

5. The fluid pressure regulator of claim 3 or 4,
    further comprising an inlet pressure gauge adapted to measure the pressure of the gaseous fluid at the gaseous fluid inlet, wherein the control unit is connected to the first inlet pressure gauge and configured to control the supply of gaseous fluid into the second chamber depending on a predetermined gas pressure value.

6. The fluid pressure regulator of any of claims 1 to 5,
    wherein the divider comprises a piston, which is biased towards the first end surface of the housing, preferably by means of a compression spring, or wherein the divider comprises a piston, which is biased towards the second end surface of the housing, preferably by means of a compression spring.

7. The fluid pressure regulator of any of claims 1 to 6,
    wherein the divider comprises a floating gauge, for example wherein the divider comprises a liquid fluid barrier.

8. The fluid pressure regulator of any of claims 1 to 7,
    further comprising a liquid fluid outlet connecting the first chamber with an engine fuel system, and a gaseous fluid outlet connecting the second chamber with the engine fuel system, for example further comprising a bypass line, which is adapted to connect a liquid fuel source directly to the engine fuel system via a bypass line, and/or wherein the gaseous fluid outlet is connected to a vent valve, said vent valve being adapted to controllably vent the second chamber of the housing.

9. The fluid pressure regulator of claims 1 to 8,
   wherein the liquid fluid is diesel and/or the gaseous fluid is natural gas.

10. Fluid system comprising a pressurized liquid fluid source and a pressurized gaseous fluid source, said liquid and gaseous fluid sources being connected to an engine system via a pressure regulator according to any of claims 1 to 15, for example wherein the fluid system is a fuel system, preferably a dual fuel system, and wherein the liquid fluid source is a liquid fuel source and the gaseous fluid source is a gaseous fuel source.

11. Engine comprising the fluid system of claim 10.

12. Method for regulating fluid pressure comprising the following steps:

   providing a housing with a cavity extending between a first end surface and a second end surface;
   providing a divider arranged within the housing and configured to divide the cavity into a first and second chamber;
   filling the first chamber with a pressurized liquid fluid;
   filling the second chamber with a pressurized gaseous fluid;
   monitoring the position of the divider within the cavity of the housing.

13. The method of claim 12, further comprising:

   controlling the amount of liquid fluid introduced into the first chamber depending on the position of the divider within the cavity of the housing, for example wherein the amount of pressurized liquid fluid introduced into the first chamber is controlled such that the divider remains in a predetermined working range about a predetermined working position.

14. The method of claim 12 or 13, further comprising:

   measuring the pressure of the gaseous fluid at a gaseous fluid inlet of the second chamber, and controlling the supply of gaseous fluid into the second chamber depending on a predetermined gas pressure value.

15. The method of any of claims 12 to 14, further comprising:

   biasing the divider towards the first end surface of the housing, preferably by means of a compression spring, or biasing the divider towards the second end surface of the housing, preferably by means of a compression spring.

FIG. 1

FIG. 2

EP 3 173 609 A1

FIG. 3A

FIG. 3B

**Fig. 4**

EP 3 173 609 A1

FIG. 5

FIG. 6

Fig. 7

Fig. 8

Europäisches
Patentamt

European
Patent Office

Office européen
des brevets

## EUROPEAN SEARCH REPORT

Application Number

EP 16 20 0320

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 298 833 B1 (DOUVILLE BRAD [CA] ET AL) 9 October 2001 (2001-10-09) * column 8, line 60 - column 10, line 28; figure 1 * | 1-15 | INV. F02M21/02 F02D19/06 |
| X | US 2014/116523 A1 (PUCKETT DANIEL R [US] ET AL) 1 May 2014 (2014-05-01) * paragraph [0033] - paragraph [0036]; figure 3 * | 1-15 | |
| X | US 2014/174402 A1 (STEFFEN JOSHUA W [US] ET AL) 26 June 2014 (2014-06-26) * paragraph [0013] - paragraph [0024]; figure 4 * | 1-15 | |

TECHNICAL FIELDS
SEARCHED (IPC)

F02M
F02D

The present search report has been drawn up for all claims

| Place of search | Date of completion of the search | Examiner |
|---|---|---|
| The Hague | 13 April 2017 | Raposo, Jorge |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 20 0320

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2017

| Patent document cited in search report | | Publication date | Patent family member(s) | | Publication date |
|---|---|---|---|---|---|
| US 6298833 | B1 | 09-10-2001 | AT | 321203 T | 15-04-2006 |
| | | | AU | 4818501 A | 23-10-2001 |
| | | | BR | 0109697 A | 11-02-2003 |
| | | | CA | 2405167 A1 | 18-10-2001 |
| | | | CN | 1422362 A | 04-06-2003 |
| | | | DE | 60118167 T2 | 15-03-2007 |
| | | | EP | 1269003 A1 | 02-01-2003 |
| | | | JP | 2003530512 A | 14-10-2003 |
| | | | US | 6298833 B1 | 09-10-2001 |
| | | | WO | 0177513 A1 | 18-10-2001 |
| US 2014116523 | A1 | 01-05-2014 | NONE | | |
| US 2014174402 | A1 | 26-06-2014 | NONE | | |

EPO FORM P0459

For more details about this annex : see Official Journal of the European Patent Office, No. 12/82